(19) Europäisches Patentamt
European Patent Office
Office européen des brevets

(11) EP 2 924 059 A1

(12) EUROPEAN PATENT APPLICATION
published in accordance with Art. 153(4) EPC

(43) Date of publication:
30.09.2015 Bulletin 2015/40

(21) Application number: 13856340.8

(22) Date of filing: 30.07.2013

(51) Int Cl.:
*C08G 63/78* (2006.01) *C08G 63/16* (2006.01)
*C08K 5/29* (2006.01) *C08L 67/02* (2006.01)

(86) International application number:
PCT/KR2013/006809

(87) International publication number:
WO 2014/081102 (30.05.2014 Gazette 2014/22)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 21.11.2012 KR 20120132598

(71) Applicant: Samsung Fine Chemicals Co., Ltd.
Ulsan-city 680-090 (KR)

(72) Inventors:
- KIM, Hee Soo
Yongin-si
Gyeonggi-do 448-150 (KR)
- CHOI, Soo Youn
Jeonju-si
Jeollabuk-do 560-896 (KR)
- CHUN, Jong Pil
Daejeon 305-728 (KR)
- YUN, Ki Chull
Cheonan-si
Chungcheongnam-do 330-260 (KR)

(74) Representative: Kador & Partner
Corneliusstraße 15
80469 München (DE)

# (54) METHOD FOR PREPARING BIODEGRADABLE POLYESTER COPOLYMER AND POLYESTER COPOLYMER PREPARED THEREBY

(57) The present invention provides a method of preparing a polyester-based polymer and a polyester-based polymer prepared by the method. The method of preparing the polyester-based polymer includes a prepolymerization step of polymerizing a dicarboxylic acid compound (A), a diol compound (B), and a carbodiimide compound (C) at 160-220 °C to produce a prepolymer; and a condensation polymerization step of performing a condensation polymerization of the prepolymer at 200-250 °C, under a vacuum pressure of 0.1 to 2 Torr.

EP 2 924 059 A1

## Description

TECHNICAL FIELD

The present invention relates to a method of preparing a biodegradable polyester-based polymer by using a carbodiimide compound, and a polymer prepared by the same.

BACKGROUND ART

Polyester is a heat-resisting, highly elastic strength synthetic resin with excellent chemical resistance, and is used for reinforced plastics. For example, polyester is widely used for car bodies, bodies of motor boat, and furniture, and also as a fiber material for clothes.

Particularly, due to the environmental problems caused by waste plastics, studies have been actively conducted on biodegradable polymers which can completely be completely decomposed. A biodegradable polyester-based polymers are polymers that may decompose to water and carbon dioxide, or water and methane gas by microorganisms existing in the nature such as bacteria, algae, and fungi.

Biodegradable polyester-based polymers can be produced by a condensation reaction of, for example, diol and diacid. There are various kinds of polyester-based polymers including aliphatic polyester-based copolymers and aromatic polyester-based copolymers as examples of the biodegradable polyester-based polymers.

A biodegradable polyester-based polymer may have a drawback in that the physical properties of a final product can be decreased as ester bonds are hydrolyzed due to atmospheric moisture and a highly humid environment. Particularly, as a film used for packaging and a shopping bag material made of a biodegradable polyester-based polymer are thin, they are easily hydrolyzed within 2 to 3 months when exposed to a high temperature and high humidity environment.

Therefore, there is a need for developing a biodegradable polyester-based polymer having a low hydrolysis tendency.

DETAILED DESCRIPTION OF THE INVENTIVE CONCEPT

TECHNICAL PROBLEM

An Example of the present invention provides a method of preparing a biodegradable polyester-based polymer by using a carbodiimide compound.

Another Example of the present invention provides a biodegradable polyester-based polymer prepared by the method.

TECHNICAL SOLUTION

One aspect of the present invention provides a method of preparing a biodegradable polyester-based polymer including:

a prepolymerization step of polymerizing a dicarboxylic acid compound (A), a diol compound (B), and a carbodiimide compound (C) which represented by the Formula (1) below, at 160-220°C to produce a prepolymer ; and

a condensation polymerization step of performing a condensation polymerization of the prepolymer at 200-250°C, under a vacuum pressure of 0.1 to 2 Torr:

[Formula 1]

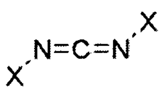

In Formula 1, X is selected from the group consisting of a hydrogen atom, a halogen atom, a substituted or unsubstituted $C_1$-$C_{20}$ alkyl group, a substituted or unsubstituted $C_1$-$C_{20}$ alkoxy group, a substituted or unsubstituted $C_2$-$C_{20}$ alkenyl group, a substituted or unsubstituted $C_2$-$C_{20}$ alkynyl group, a substituted or unsubstituted $C_1$-$C_{20}$ heteroalkyl group, a substituted or unsubstituted $C_6$-$C_{30}$ aryl group, a substituted or unsubstituted $C_7$-$C_{30}$ arylalkyl group, a substituted or unsubstituted $C_5$-$C_{30}$ heteroaryl group, and a substituted or unsubstituted $C_3$-$C_{30}$ heteroarylakyl group.

The amount of the carbodiimide compound (C) used may be less than 0.1-1 wt% with respect to the total weight of the composition consisting of the dicarboxylic acid compound (A), the diol compound (B), and the carbodiimide compound (C).

The ratio of the amount of the dicarboxylic acid compound (A) used to the amount of the diol compound (B) used may be 1:1 to 1:4, based on the molar ratio.

When two species from among the dicarboxylic acid compound (A) are used, the ratio between the amounts of the above two species may be 1:1 to 1:1.3, based on the molar ratio.

X may be a substituted or unsubstituted $C_6$-$C_{15}$ aryl group.

The dicarboxylic acid compound (A) may be one or more species selected from the group consisting of a substituted or unsubstituted $C_4$-$C_{10}$ aliphatic dicarboxylic acid, a substituted or unsubstituted $C_8$-$C_{20}$ aromatic dicarboxylic acid, a substituted or unsubstituted $C_4$-$C_{10}$ aliphatic diester, and a substituted or unsubstituted $C_8$-$C_{20}$ aromatic diester.

The diol compound (B) may be one or more species selected from the group consisting of a substituted or unsubstituted $C_2$-$C_{10}$ aliphatic diol, and a substituted or unsubstituted $C_6$-$C_{20}$ aromatic diol.

The prepolymerization step may be carried out in the presence of at least one of a catalyst and a thermostabili

The prepolymerization step includes a first prepolymerization step of polymerizing the dicarboxylic acid compound (A) and a part of the diol compound (B) to produce a first prepolymer; and a second prepolymerization step of polymerizing the first prepolymer and the remainder of the diol compound (B) to produce a second prepolymer; and the carbodiimide compound (C) may be used in at least one step of the first prepolymerization step, the second prepolymerization step, and the condensation polymerization step.

The amount of the diol compound (B) used in the second prepolymerization step may be 1.0-1.3, based on 1 mol of the amount of the diol compound (B) used in the first prepolymerization step.

Another aspect of the present invention provides a biodegradable polyester-based polymer prepared by the previously described method.

A hydrolysis rate of the biodegradable polyester-based polymer may be 0-20%.

The biodegradable polyester-based polymer may have an acid value of 4mg KOH/g or lower.

ADVANTAGEOUS EFFECTS

A method of preparing a biodegradable polyester-based polymer according to an Example of the present invention provides a biodegradable polyester-based polymer having a lower hydrolysis tendency and lower acid value than a conventional polyester-based polymer.

BEST MODE

The following is a detailed description of a method of preparing a biodegradable polyester-based polymer according to an Example of the present invention and a biodegradable polyester-based polymer prepared by the method.

In the present description, a "carbodiimide-containing compound" refers to a compound containing a "-N=C=N-" functional group.

In the present description, a "dicarboxylic acid compound" refers to a compound containing two carboxyl groups.

In the present description, "derivatives of a dicarboxylic acid compound" refer to compounds including all derivatives of a dicarboxylic acid compound such as an ester derivative, an acyl halide derivative, and an anhydride derivative thereof.

In the present description, a "diol compound" refers to a compound containing two hydroxyl groups.

In the present description, a "tricarboxylic acid compound" refers to a compound containing three carboxyl groups.

In the present description, "derivatives of a tricarboxylic acid compound" refer to compounds including all derivatives of a tricarboxylic acid compound such as an ester derivative, an acyl halide derivative, and an anhydride derivative thereof.

In the present description, an "extent of reaction" refers to a ratio of an actual polymer yield to a theoretical polymer yield. An "extent of reaction" can be obtained, for example, in case of performing a condensation polymerization of a dicaboxylic acid compound and a diol compound, by measuring a ratio of the actual produced moisture content to the theoretical moisture content which can be produced when the dicaboxylic acid compound and the diol compound are reacted to attain a reaction yield of 100%.

According to an aspect of the present invention, a method of preparing a biodegradable polyester-based polymer includes a prepolymerization step of polymerizing a dicarboxylic acid compound (A), a diol compound (B), and a carbodiimide compound (C), which is represented by Formula (1) below, at 160-220°C to produce a prepolymer ; and

a condensation polymerization step of performing a condensation polymerization of the prepolymer at 200-250°C, under a vacuum pressure of 0.1 to 2 Torr:

[Formula 1]

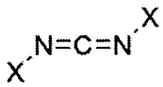

In Formula 1, X is selected from the group consisting of a hydrogen atom, a halogen atom, a substituted or unsubstituted $C_1$-$C_{20}$ alkyl group, a substituted or unsubstituted $C_1$-$C_{20}$ alkoxy group, a substituted or unsubstituted $C_2$-$C_{20}$ alkenyl group, a substituted or unsubstituted $C_2$-$C_{20}$ alkynyl group, a substituted or unsubstituted $C_1$-$C_{20}$ heteroalkyl group, a substituted or unsubstituted $C_6$-$C_{30}$ aryl group, a substituted or unsubstituted $C_7$-$C_{30}$ arylalkyl group, a substituted or unsubstituted $C_5$-$C_{30}$ heteroaryl group, and a substituted or unsubstituted $C_3$-$C_{30}$ heteroarylakyl group.

When a polymerization temperature in the prepolymerization step is lower than 160°C, the reactivity of monomers is low, so that the reaction time may increase. When a polymerization temperature in the prepolymerization step is higher than 220°C, a thermal decomposition of the prepolymer may occur.

When a polymerization temperature of the condensation polymerization step is lower than 200 °C, the reactivity of the prepolymer is low, so that the reaction time may increase. When a polymerization temperature of the condensation polymerization step is higher than 250 °C, a thermal decomposition of a produced polymer may occur.

When a polymerization pressure of the condensation polymerization step is higher than 2 Torr, the unreacted diol compound that are excessively used and other monomers are hard to be eliminated, so that the condensation polymerization time may increase. In addition, the condensation polymerization pressure in the condensation polymerization step is in reality difficult to be lowered below 0.1 Torr. Specifically, the condensation polymerization pressure in the condensation polymerization may be 0.5 to 1 Torr.

The carbodiimide compound (C) can increase a hydrolysis-resistance of the polymer by decreasing an acid value of the polymer, which is a final product. Specifically, the carbodiimide compound (C) plays the role of reducing the amount of an acid group (e.g. -OH, -COOH, etc.) existing as an end group of a polymer by participating in polymerization reaction in the prepolymerization step and/or the condensation polymerization step.

The amount of the carbodiimide compound (C) used may be less than 0.1-1 wt%, e.g., 0.1-0.5 wt% with respect to the total weight of the composition consisting of the dicarboxylic acid compound (A), the diol compound (B), and the carbodiimide compound (C). If the amount of the carbodiimide compound (C) used is within the range (0.1 to 1 wt%), a polymer having a high molecular weight and a low acid value can be obtained.

The ratio of the amount of the dicarboxylic acid compound (A) used to the amount of the diol compound (B) used may be 1:1 to 1:4, based on the molar ratio. If the molar ratio of the amount of the dicarboxylic acid compound (A) used to the amount of the diol compound (B) used is within the range (1:1 to 1:4), the extent of reaction of monomers may be increased. For example, the amount of the diol compound (B) may be excessive in comparison with the amount of the dicarboxylic acid compound (A). Specifically, the amount of the diol compound (B) used may be 1.0 to 1.3 times, e.g., 1.04-1.07 times greater than the amount of dicarboxylic acid compound (A) used, in terms of chemical equivalent.

The prepolymerization step may be performed for 130 to 150 minutes. An end point of the prepolymerization step may be determined by measuring the amount of alcohol or water, which is a byproduct of the step. For example, when 1 mol of dimethyl terephthalate, as a dicarboxylic acid compound (A), and 1.3 mol of 1,4-butanediol, as a diol compound (B), are used, if it is assumed that all amount of the used dimethyl terephthalate has reacted with the butanediol, the prepolymerization step may be ended after more than 95% (that is, 1.9 mol) of 2 mol methanol, which is supposed to be produced, is generated as a byproduct.

In order to increase a reaction rate by moving a chemical equilibrium in the prepolymerization step, alcohol, water, which are byproducts, and/or an unreacted diol compound may be discharged out of the reaction system by evaporation or distillation.

The condensation polymerization step may be performed for 120 to 150 minutes.

X may be each independently a substituted or unsubstituted $C_6$-$C_{15}$ aryl group.

The dicarboxylic acid compound (A) may be one or more species selected from the group consisting of an aliphatic dicarboxylic acid, a derivative of the aliphatic dicarboxylic acid, an aromatic dicarboxylic acid, and a derivative of the aromatic dicarboxylic acid.

The dicarboxylic acid compound (A) may be a compound expressed by Formula 2 below.

[Formula 2] $R_2OOC\text{-}Ar\text{-}COOR_2$

In Formula 2, Ar is a substituted or unsubstituted $C_2$-$C_8$ alkylene group, a substituted or unsubstituted $C_2$-$C_8$

heteroalkylene group; a substituted or unsubstituted $C_5$-$C_8$ cycloalkylene group; a substituted or unsubstituted $C_4$-$C_8$ heterocycloalkylene group; a substituted or unsubstituted $C_6$-$C_{18}$ arylene group; or a substituted or unsubstituted $C_4$-$C_{18}$ heteroarylene group; and $R_2$ is hydrogen or a substituted or unsubstituted $C_1$-$C_{10}$ alkyl group.

The dicarboxylic acid compound (A) may be one or more species selected from the group consisting of a $C_4$-$C_{10}$ aliphatic dicarboxylic acid, a derivative of the aliphatic dicarboxylic acid, a $C_8$-$C_{20}$ aromatic dicarboxylic acid, and a derivative of the aromatic dicarboxylic acid.

Specifically, the dicarboxylic acid compound (A) may be one or more species selected from the group consisting of a dimethyl terephthalic acid, a terephthalic acid, a dimethyl phthalic acid, a phthalic acid, a dimethyl isophthalic acid, an isophthalic acid, a dimethyl naphthalene 2,6-dicarboxylic acid, a dimethyl naphthalene 2,6-dicarboxylic acid, an oxalic acid, a malonic acid, a succinic acid, a glutaric acid, an adipic acid, a pimelic acid, an azelaic acid, a sebacic acid, a nonanoic acid, a decanoic acid, and a dodecanoic acid.

When two species of the dicarboxylic acid compound (A) are used, the ratio between the amounts of the above two species may be 1:1 to 1:1.3, based on the molar ratio. For example, when dimethyl terephthalate and adipic acid are used together as the dicarboxylic acid compound (A), the dimethyl terephthalate:adipic acid molar ratio may be 1:1-1.3:1.

The diol compound (B) may be one or more species selected from the group consisting of an aliphatic diol, a derivative of the aliphatic diol, an aromatic diol, and a derivative of the aromatic diol. For example, the diol compound (B) may be one or more species selected from the group consisting of a $C_2$-$C_{10}$ aliphatic diol, and a $C_6$-$C_{20}$ aromatic diol.

The diol compound (B) may be a compound expressed by Formula 3 below.

[Formula 3] $HO-R_1-OH$

In Formula 3, $R_1$ is a substituted or unsubstituted $C_2$-$C_{10}$ alkylene group; a substituted or unsubstituted $C_2$-$C_{10}$ heteroalkylene group; a substituted or unsubstituted $C_5$-$C_{10}$ cycloalkylene group; a substituted or unsubstituted $C_3$-$C_{10}$ heterocycloalkylene group; a substituted or unsubstituted $C_6$-$C_{20}$ arylene group; or a substituted or unsubstituted $C_4$-$C_{20}$ heteroarylene group.

The diol compound (B) may be one or more species selected from the group consisting of 1,2-propanediol, 1,3-propanediol, 1,4-butanediol, 2,3-butanediol, 1,2-butanediol, 1,5-pentanediol, and 1,4-cyclohexanediol.

The "arylene group" may be, but is not limited to, a phenylene group, a biphenylene group, a terphenylene group, a stilbenylene group, a naphthylenyl group, and compounds having the structures shown below. In the structures shown below, a line passing through two or more rings indicates that an arbitrary site of the rings through which the line passes may be substituted.

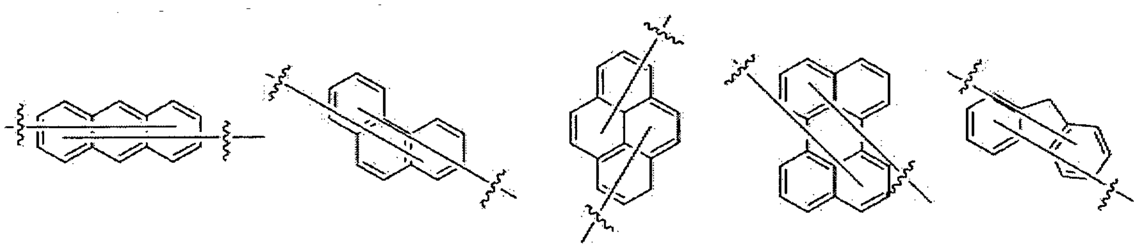

The "heteroarylene group" may contain O, N, or S as a heteroatom and may be, but is not limited to, compounds having the structures shown below, for example. In the structures shown below, a line passing through two or more rings indicates that an arbitrary site of the rings through which the line passes may be substituted.

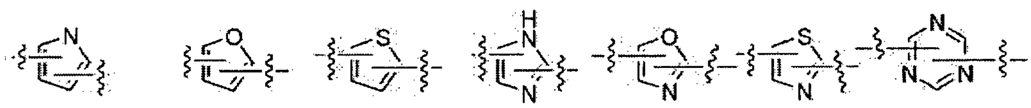

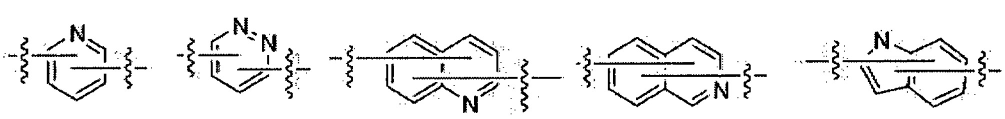

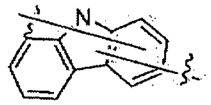 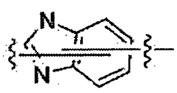 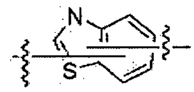 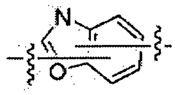

The "halogen atom" may be, for example, F, Cl, Br or I.

The "alkyl group" may have, for example, a chain, branched, or ring shape, and may be a methyl, ethyl, propyl, isobutyl, sec-butyl, tert-butyl, pentyl, or hexyl group. One or more hydrogen atoms contained in the alkyl group may be substituted with another substituent. Non-limiting examples of the substituent include a $C_1$-$C_{10}$ alkyl group, a $C_2$-$C_{10}$ alkenyl group, a $C_2$-$C_{10}$ alkynyl group, a $C_6$-$C_{12}$ aryl group, a $C_2$-$C_{12}$ heteroaryl group, a $C_6$-$C_{12}$ arylakyl group, a halogen atom, a cyano group, an amino group, an amidino group, a nitro group, an amide group, a carbonyl group, a hydroxyl group, a sulfonyl group, a carbamate group, and a $C_1$-$C_{10}$ alkoxy group.

The "alkenyl group" or the "alkynyl group" refers to an alkyl group containing at least one carbon-carbon double bond or triple bond in the middle or at an end thereof, respectively. Examples of the "alkenyl group" or the "alkynyl group" are ethylene, propylene, butylene, hexylene, and acetylene. One or more hydrogen atoms in the alkenyl group or alkynyl group may be substituted with a substituent, as in the case of the alkyl group.

The "aryl group" may be, for example, monocyclic or polycyclic. Specifically, a monocyclic aryl group may be, but is not limited to, a phenyl group, a biphenyl group, a terphenyl group or a stilbenyl group. A polycyclic aryl group may be, but not limited to, a naphthyl group, an anthryl group, a phenanthryl group, a pyrenyl group, a perylenyl group, a crycenyl group, or a fluorenyl group. One or more hydrogen atoms in the aryl group may be respectively substituted with a substituent, as in the case of the alkyl group.

The "heteroaryl group" may contain O, N or S as a heteroatom. Specifically, the heteroaryl group may be, but is not limited to, a furan group, a pyrrole group, a thiophene group, an imidazole group, an oxazole group, a thiazole group, a triazole group, a pyridyl group, a pyridazil group, a quinolinyl group, an isoquinolinyl group, an acridyl group, and compounds having the structures shown below. In the structures shown below, a line passing through two or more rings indicates that an arbitrary site of the rings through which the line passes may be substituted. One or more hydrogen atoms in the aryl group may be respectively substituted with a substituent, as in the case of the alkyl group.

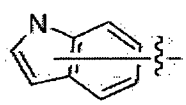 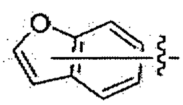 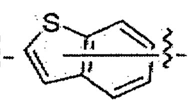 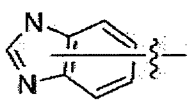 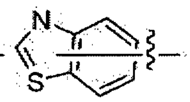 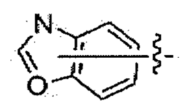

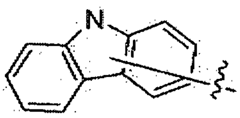 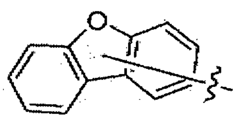 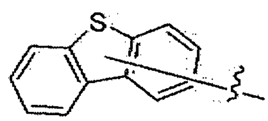 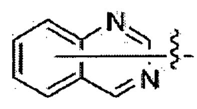 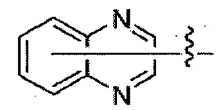

The prepolymerization step may be carried out under the presence of at least one of a catalyst and a thermostabilizer.

The catalyst may include magnesium acetate, stannous acetate, tetra-n-butyl titanate, and lead acetate, sodium acetate, potassium acetate, antimony trioxide, N,N-dimethylaminopyridine, N-methylimidazole, and a combination thereof. The metal compound catalyst may be added simultaneously with a monomer, and a transesterification may occur under the presence of the metal compound catalyst. For example, the amount of the metal compound catalyst may be 100 to 500 ppm with respect to the weight of the dicarboxylic acid compound (A) added during the reaction.

The thermostablizer may be an organic or inorganic phosphorus compound. The organic or inorganic phosphorus compound may be, for example, a phosphoric acid and its organic ester; and a phosphorous acid and its organic ester. A commercially available thermostablizermay be, for example, a phosphoric acid, alkyl or aryl phosphates, specifically, a triphenyl phosphate. For example, the amount of an organic or inorganic phosphorus compound used, when a metal compound catalyst and an organic or inorganic phosphorus compound are used together may be 100 to 500 ppm with respect to the weight of a dicarboxylic acid compound (A) added during the reaction. Deterioration and discoloration of the biodegradable polyester-based polymer may be prevented by using the organic or inorganic phosphorus compound.

The prepolymerization step may include a first prepolymerization step of producing a first prepolymer by polymerizing the dicarboxylic acid compound (A) and a part of the diol compound (B); a second prepolymerization step of polymerizing the first prepolymer and the remainder of the diol compound (B) to produce a second prepolymer, and the carbodiimide compound (C) may be used in at least one of the first prepolymerization step, the second prepolymerization step, and the condensation polymerization step. By dividing the prepolymerization step into a first prepolymerization

step and a second prepolymerization step, a polymer with excellent hydrolysis-resistance and low acidic value may be obtained.

The first prepolymerization step may be carried out under the presence of the catalyst and the thermostabilizer, and the second prepolymerization step may be carried out under the presence of the catalyst.

The amount of the diol compound (B) used in the second prepolymerization step may be 1.0-1.3, based on 1 mol of the amount of the diol compound (B) used in the first prepolymerization step.

Another aspect of the present invention provides a biodegradable polyester-based polymer prepared by a method of an aspect of the present invention.

The biodegradable polyester-based polymer may have a hydrolysis rate, which is expressed by Equation 1 below, of 0-20%.

[Equation 1]

$$\text{Hydrolysis rate (\%)} = (M_i - M_f)/M_i \times 100$$

In Equation 1, $M_i$ denotes a weight-average molecular weight of a biodegradable polyester-based polymer which has not been heat-treated, and $M_f$ denotes a weight-average molecular weight of a biodegradable polyester-based polymer which has been heat-treated in 100 °Cwater for 3 hours. The heat treatment may be performed in an excessive amount of water.

The biodegradable polyester-based polymer may have an acid value of 4 mgKOH/g or lower. For example, the acid value of the biodegradable polyester-based polymer may be 1 to 3 mgKOH/g. The acid value may be measured by titration method. For example, the acid value may be measured by taking 0.5 g sample of a biodegradable polyester-based polymer, dissolving the sample in 20 ml chloroform, further dissolving the sample by adding 15 ml of ethanol thereto, and then titrating the resulting solution with KOH.

The biodegradable polyester-based polymer can be used in preparing a molded product. The molded product can be, for example, an injection molded product, sheets, automobile interior material, an electronic appliance case, a storage case, a mobile phone case, packaging film, or an envelope.

The following is a more detailed description of exemplary Examples of the present invention. These exemplary Examples are intended only to illustrate the present invention, and it will be apparent to those of ordinary skill in the art to which the present invention belongs to that the scope of the present invention is not limited by these exemplary Examples.

MODE OF THE INVENTIVE CONCEPT

Examples 1 and 2

(Two prepolymerization steps: without adding a carbodiimide compound)

Examples 1 and 2 were carried out according to the reaction conditions shown in Table 1 below.

93.21 g (0.49 mol) of dimethyl phthalate, 56.23 g (0.62 mol) of 1,4-butanediol, 0.15 g of tetra-n-butyl titanate, and 0.1 g of triphenyl phosphate were put into a 500 mL three-neck round bottom flask having a Dean-Stark condenser, a nitrogen inlet, and a stirrer.

The mixture was heated at 190 °C for about 75 minutes in a nitrogen atmosphere and reacted until 32 ml of methanol were discharged. Subsequently, 75.99 g (0.52 mol) of adipic acid and 60.92 g (0.67 mol) of 1,4-butanediol were added to the flask. After adding 0.15 g of tetra-n-butyl titanate, the mixture was heated at 200 °C for about 70 minutes in a nitrogen atmosphere and reacted until 17 ml water was discharged. As a result, a prepolymer was obtained.

(Condensation polymerization step: adding a carbodiimide compound)

Then, carbodiimide (Z), having the structure shown below, in an amount of 0.28g and 0.57g was added, respectively, to the three-neck round bottom flask. The three-neck round bottom flask was heated up to 240°C for 120 minutes and 130 minutes, respectively, and maintained under a vacuum pressure of 0.5 Torr or lower. As a result, a prepolymer was obtained.

[Z]: bis-(2,6-diisopropyl-benzyl)-carbodiimide

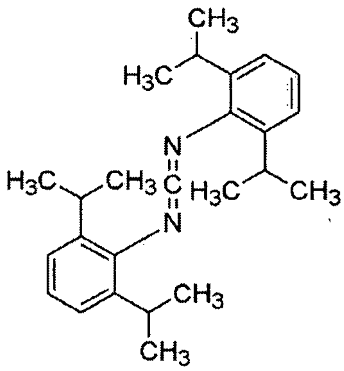

[Table 1]

| | Example 1 | Example 2 |
|---|---|---|
| 1,4-butanediol (g) | 111.74 | 111.74 |
| adipic acid (g) | 75.99 | 75.99 |
| dimethyl phthalate (g) | 93.21 | 93.21 |
| bis-(2,6-diisopropyl-benzyl)-carbodiimide (g) | 0.28 | 0.57 |
| tetra-n-butyl titanate (g) | 0.3 | 0.3 |
| triphenyl phosphate (g) | 0.1 | 0.1 |
| prepolymerization reaction time (min) | 135 | 135 |
| condensation polymerization reaction time (min) | 120 | 130 |

Examples 3 and 4

Examples 3 and 4 were carried out according to the reaction conditions shown in Table 2 below.

(Two prepolymerization steps: adding a carbodiimide compound in the first step)

93.21 g (0.49 mol) of dimethyl phthalate, 56.23 g (0.62 mol) of 1,4-butanediol, 0.57 g and 1.40 g of carbodiimide (Z), having the structure shown below, respectively, 0.15 g of tetra-n-butyl titanate, and 0.1 g of triphenyl phosphate were put into a 500 mL three-neck round bottom flask having a Dean-Stark condenser, a nitrogen inlet, and a stirrer. The mixture was heated at 190 °C for about 70 minutes in a nitrogen atmosphere and reacted until 35 ml of methanol were discharged. Subsequently, 75.99 g (0.52 mol) of adipic acid and 60.29 g (0.67 mol) of 1,4-butanediol were added thereto. After adding 0.15 g of tetra-n-butyl titanate thereto, the mixture was heated at 200 °C for about 65 minutes in a nitrogen atmosphere and reacted until 17 ml of water were discharged. As a result, a prepolymer was obtained.

[Z]: bis-(2,6-diisopropyl-benzyl)-carbodiimide

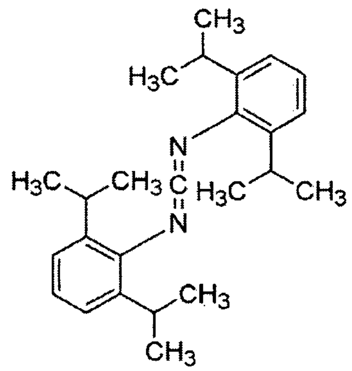

(Condensation polymerization step: without adding a carbodiimide compound)

Then, the three-neck round bottom flask was heated up to 240°C for 140 minutes and 135 minutes, respectively, while maintaining a vacuum pressure of 0.5 Torr or lower. As a result, a prepolymer was obtained.

[Table 2]

| | Example 3 | Example 4 |
|---|---|---|
| 1,4-butanediol (g) | 111.74 | 111.74 |
| adipic acid (g) | 75.99 | 75.99 |
| dimethyl phthalate (g) | 93.21 | 93.21 |
| bis-(2,6-diisopropyl-benzyl)-carbodiimide (g) | 0.57 | 1.40 |
| tetra-n-butyl titanate (g) | 0.3 | 0.3 |
| triphenyl phosphate (g) | 0.1 | 0.1 |
| prepolymerization reaction time (min) | 120 | 125 |
| condensation polymerization reaction time (min) | 140 | 135 |

Comparative example (a compounding process)

4 g of carbodiimide compound (Z) were added to 2,000 g of PBAT (polybutylene adipate-co-terephthalate) (melting temperature: 127 °C, S-ENPOL. Inc, PBG7070). The mixed material was fed into a hopper of a twin-screw extruder for laboratory use, and the temperature of a barrel was set to be 140 °C, which was higher than the melting temperature of the PBAT. Then, the internal pressure of the extruder was maintained at atmospheric pressure. A strand extruded from a nozzle of a dye was cooled by letting it pass through a cooler, and then cut into a pellet form by using a pelletizer. The pellet type particles were subsequently dried in an oven at 60 °C for 24 hours. The dried pellets were stored in a polyethylene bag in order to prevent moisture infiltration.

Evaluation example

(1) Molecular weight evaluation

The polyester-based polymers of the Comparative Example and the Examples 1-4 were diluted with chloroform to a concentration of 0.1 wt% to prepare a solution to measure a weight-average molecular weight (Mw) and a number-average molecular weight (Mn) by gel permeation chromatography (GPC). The measurement was performed at 35 °C at a flow rate of 1 ml/min.

(2) Hydrolysis rate measurement

The molecular weight was measured before and after heating the respective biodegradable polyester-based polymers in 100 °C water for 3 hours. Then, a hydrolysis rate of the respective biodegradable polyester-based polymers was measured according to the equation below.

$$\text{Hydrolysis rate (\%)} = (M_i - M_f)/M_i \times 100$$

In the Equation above, $M_i$ denotes a weight-average molecular weight of a biodegradable polyester-based polymer which has not been heat-treated, and $M_f$ denotes a weight-average molecular weight of a biodegradable polyester-based polymer which has been heat-treated at 100 °C water for 3 hours.

(3) Acid value measurement

An acid value was measured by titration. The acid value was measured by taking 0.5 g sample of a biodegradable polyester-based polymer, dissolving the sample in 20 ml of chloroform, further dissolving the sample by adding 15 ml of ethanol thereto, and then titrating the solution with KOH.

[Table 3]

| | Molecular weight (Mn/Mw) | | Hydrolysis rate (%) | Acid value |
|---|---|---|---|---|
| | $M_i$ | $M_f$ | | |
| Comparative Example | 64,000/163,000 | 52,000/123,000 | 25 | 5.4 |
| Example 1 | 64,000/138,000 | 56,000/118,000 | 15 | 3.8 |
| Example 2 | 62,000/144,000 | 57,000/122,000 | 15 | 3.3 |
| Example 3 | 71,000/150,000 | 64,000/131,000 | 13 | 2.6 |
| Example 4 | 67,000/147,000 | 58,000/123,000 | 16 | 2.7 |

According to Table 3 above, the biodegradable polyester-based polymers prepared in Examples 1-4 have a lower hydrolysis rate than the biodegradable polyester-based polymer prepared in the Comparative Example.

While the present invention has been particularly shown and described with reference to exemplary Examples thereof, it will be understood by those of ordinary skill in the art that various changes in form and details may be made therein without departing from the spirit and scope of the present invention as defined by the following claims.

## Claims

**1.** A method of preparing a biodegradable polyester-based polymer including:

a prepolymerization step of polymerizing a dicarboxylic acid compound (A), a diol compound (B), and a carbodiimide compound (C), which is represented by Formula 1 below, at 160-220°C to produce a prepolymer; and a condensation polymerization step of performing a condensation polymerization of the prepolymer at 200-250 °C, under a vacuum pressure of 0.1 to 2 Torr:

[Formula 1]

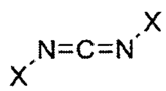

wherein X is selected from the group consisting of a hydrogen atom, a halogen atom, a substituted or unsubstituted $C_1$-$C_{20}$ alkyl group, a substituted or unsubstituted $C_1$-$C_{20}$ alkoxy group, a substituted or unsubstituted $C_2$-$C_{20}$ alkenyl group, a substituted or unsubstituted $C_2$-$C_{20}$ alkynyl group, a substituted or unsubstituted $C_1$-$C_{20}$ heteroalkyl group, a substituted or unsubstituted $C_6$-$C_{30}$ aryl group, a substituted or unsubstituted $C_7$-$C_{30}$ arylalkyl group, a substituted or unsubstituted $C_5$-$C_{30}$ heteroaryl group, and a substituted or unsubstituted $C_3$-$C_{30}$ heteroarylakyl group.

**2.** The method of preparing a biodegradable polyester-based polymer according to claim 1, wherein the amount of the carbodiimide compound (C) used may be less than 0.1-1 wt% with respect to the total weight of the composition consisting of the dicarboxylic acid compound (A), the diol compound (B), and the carbodiimide compound (C).

**3.** The method of preparing a biodegradable polyester-based polymer according to claim 1, wherein the ratio of the amount of the dicarboxylic acid compound (A) used to the amount of the diol compound (B) used is 1:1 to 1:4, based on the molar ratio.

**4.** The method of preparing a biodegradable polyester-based polymer according to claim 1, wherein, when two species of the dicarboxylic acid compound are used, the ratio between the amounts of the above two species is 1:1 to 1:1.3, based on the molar ratio.

**5.** The method of preparing a biodegradable polyester-based polymer according to claim 1, wherein X is a substituted or unsubstituted $C_6$-$C_{15}$ aryl group.

**6.** The method of preparing a biodegradable polyester-based polymer according to claim 1, wherein the dicarboxylic acid compound (A) is one or more species selected from the group consisting of a substituted or unsubstituted $C_4$-$C_{10}$ aliphatic dicarboxylic acid, a substituted or unsubstituted $C_8$-$C_{20}$ aromatic dicarboxylic acid, a substituted or unsubstituted $C_4$-$C_{10}$ aliphatic diester, and a substituted or unsubstituted $C_8$-$C_{20}$ aromatic diester.

**7.** The method of preparing a biodegradable polyester-based polymer according to claim 1, wherein the diol compound (B) is one or more species selected from the group consisting of a substituted or unsubstituted $C_2$-$C_{10}$ aliphatic diol, and a substituted or unsubstituted $C_6$-$C_{20}$ aromatic diol.

**8.** The method of preparing a biodegradable polyester-based polymer according to claim 1, wherein the prepolymerization step is carried out in the presence of at least one of a catalyst and a thermostabilizer.

**9.** The method of preparing a biodegradable polyester-based polymer according to claim 1, wherein the prepolymerization step includes
a first prepolymerization step of polymerizing a dicarboxylic acid compound (A) and a part of the diol compound (B) to produce a first prepolymer, and
a second prepolymerization step of polymerizing the first prepolymer and the remainder of the diol compound (B) to produce a second prepolymer, and
wherein the carbodiimide compound (C) is used in at least one of the first prepolymerization step, the second prepolymerization step, and the condensation polymerization step.

**10.** The method of preparing a biodegradable polyester-based polymer according to claim 9, wherein the amount of the diol compound (B) used in the second prepolymerization step may be 1.0-1.3, based on 1 mol of the amount of the diol compound (B) used in the first prepolymerization step.

**11.** A biodegradable polyester-based polymer prepared by the method of any one of claims 1 to 10.

**12.** The biodegradable polyester-based polymer according to claim 11, having a hydrolysis rate of 0-20%.

**13.** The biodegradable polyester-based polymer according to claim 11, having an acid value of 4mg KOH/g or lower.

# INTERNATIONAL SEARCH REPORT

International application No.
**PCT/KR2013/006809**

## A. CLASSIFICATION OF SUBJECT MATTER

***C08G 63/78(2006.01)i, C08G 63/16(2006.01)i, C08K 5/29(2006.01)i, C08L 67/02(2006.01)i***

According to International Patent Classification (IPC) or to both national classification and IPC

## B. FIELDS SEARCHED

Minimum documentation searched (classification system followed by classification symbols)

C08G 63/78; C08G 69/48; C08L 3/02; C08L 67/06; C08L 67/02; C08G 63/16; C08L 101/00; C08L 67/00; C08K 5/29; C08L 67/04; C08J 5/18

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: carbodiimide, polyester, biodegration, dicarboxylic acid, diol, prepolymerization, condensation polymerization, vacuum

## C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-223023 A (SONY CORP.) 25 September 2008<br>See abstract; claim 1; paragraphs [0026]-[0028]. | 11-13<br>1-10 |
| Y<br>A | JP 09-188807 A (NISSHINBO IND. INC.) 22 July 1997<br>See abstract; claim 5; paragraphs [0019], [0022], [0026] and [0027]. | 1-10<br>11-13 |
| A | JP 2008-056774 A (NIPPON A & L K. K.) 13 March 2008<br>See abstract; claims 1-4. | 1-13 |
| A | JP 2008-024764 A (SHOWA HIGHPOLYMER CO., LTD.) 07 February 2008<br>See abstract; claims 1-17. | 1-13 |
| A | JP 2008-094883 A (MITSUBISHI CHEMICALS CORP.) 24 April 2008<br>See abstract; claims 1-21. | 1-13 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 SEPTEMBER 2013 (26.09.2013) | **26 SEPTEMBER 2013 (26.09.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2013/006809

| Patent document cited in search report | Publication date | Patent family member | Publication date |
|---|---|---|---|
| JP 2008-223023 A | 25/09/2008 | CN 1708533 C0 | 14/12/2005 |
| | | EP 1275690 A3 | 23/04/2003 |
| | | EP 1502928 A1 | 02/02/2005 |
| | | EP 2258761 A1 | 08/12/2010 |
| | | EP 2258761 B1 | 25/01/2012 |
| | | JP 04120776 B2 | 16/07/2008 |
| | | JP 2003-089721A | 28/03/2003 |
| | | JP 2003-089751A | 28/03/2003 |
| | | KR 10-0892100 B1 | 08/04/2009 |
| | | KR 10-2004-0100842 A | 02/12/2004 |
| | | TW I319422 A | 11/01/2010 |
| | | TW I319422 B | 11/01/2010 |
| | | US 2003-0018099 A1 | 23/01/2003 |
| | | US 2005-0054810 A1 | 10/03/2005 |
| | | US 2008-0146697 A1 | 19/06/2008 |
| | | US 7285589 B2 | 23/10/2007 |
| | | US 7642310 B2 | 05/01/2010 |
| | | WO 03-091310 A1 | 06/11/2003 |
| JP 09-188807 A | 22/07/1997 | JP 3332701 B2 | 07/10/2002 |
| JP 2008-056774 A | 13/03/2008 | NONE | |
| JP 2008-024764 A | 07/02/2008 | JP 4414415 B2 | 10/02/2010 |
| JP 2008-094883 A | 24/04/2008 | NONE | |

Form PCT/ISA/210 (patent family annex) (July 2009)